# EUROPEAN PATENT SPECIFICATION

(11) **EP 3 919 946 B1**
(45) Date of publication and mention of the grant of the patent: **08.01.2025**
(21) Application number: 20774200.8
(22) Date of filing: 25.02.2020
(51) Int. Cl.: G02B 3/14, G02B 13/00, G03B 17/02, G02B 7/02, G02B 7/04, G02B 7/08, G03B 3/10, H04N 23/52, H04N 23/55

(54) **IMAGE SENSOR**
BILDSENSOR
CAPTEUR D'IMAGE

(30) Priority: 15.03.2019 JP 2019048731
(43) Date of publication of application: 08.12.2021
(73) Proprietor: OMRON Corporation, Shiokoji-dori, Shimogyo-Ku Kyoto-shi Kyoto 600-8530 (JP)
(72) Inventor: UETSUJI, Yasuhito, Kyoto-shi, Kyoto 600-8530 (JP); WATANABE, Kosuke, Kyoto-shi, Kyoto 600-8530 (JP); KATO, Yutaka, Kyoto-shi, Kyoto 600-8530 (JP)
(74) Representative: Isarpatent
(86) International application number: PCT/JP2020/007437
(87) International publication number: WO 2020/189187

(56) References cited:
- EP-A1- 2 085 796
- JP-A- 2000 312 304
- JP-A- 2010 286 740
- JP-A- 2010 286 740
- JP-A- 2011 039 352
- JP-A- H06 347 610
- KR-A- 20180 087 082
- US-A1- 2008 277 480
- US-A1- 2018 372 985

## Description

### TECHNICAL FIELD

The present invention relates to an image sensor, and more particularly, to an image sensor including an optical system incorporating a liquid lens.

### BACKGROUND ART

Image sensor systems are common in factory production lines for automation or labor saving in inspecting and managing products. A typical known system includes a camera and a controller connected to each other with a cable (refer to Patent Literature 1). A recent processor-integrated image sensor combines a camera with a controller to perform processes from imaging control to image processing in a single device. Such a processor-integrated image sensor is also referred to as a smart camera, and may incorporate an illuminator and a lens.

A recent image sensor includes an optical system incorporating a liquid lens. Patent Literature 1 describes an imaging optical system shown in FIG. 5 including multiple solid lenses (72, 76, 74), an aperture stop (70), and a liquid lens arranged in order of distance from the object. The literature also describes the solid lenses preferably formed from glass or plastic. The liquid lens is a varifocal lens having the refractive power adjustable by changing the application voltage. An optical system incorporating the liquid lens includes no mechanical moving parts, and thus allows faster autofocus (AF) and has a longer service life (or an infinite service life) than typical motor-driven optical systems.

### CITATION LIST

### PATENT LITERATURE

Patent Literature 1: U.S. Patent Application Publication No. 2009/166543 JP2010286740A describes an optical information reader having a focus function and a zoom function using liquid lenses. The reader comprises a lens module having a plurality of liquid lenses. Each liquid lens may be provided with a temperature sensor. KR20180087082A describes a camera module including a lens capable of adjusting the focal distance using electrical energy. The module comprises a first lens unit, a second lens unit, a liquid lens unit and a lens housing. A temperature sensor arranged in a groove of the lens housing is capable of measuring the ambient temperature of the liquid lens unit.

### SUMMARY

### TECHNICAL PROBLEM

For the above processor-integrated image sensor, the inventors have noted the use of an optical system combining a liquid lens with plastic lenses, which are lighter and less expensive than glass lenses. An image sensor may be attached to a moving object (e.g., the end of a robot arm) to capture images while the position, the posture, and the focus position of the image sensor are being changed as intended. For such use, the image sensor being lightweight or enabling fast AF can provide a high added value.

However, the inventors exploring such structures have faced an issue of temperature compensation in the optical system. Liquid lenses and plastic lenses are more temperature-dependent than, for example, glass lenses, and may have the optical properties greatly dependent on temperature. In particular, a processor-integrated image sensor includes an image sensor body including components that generate much heat (e.g., a processor and a drive circuit). The image sensor in operation may have a temperature a dozen degrees Celsius higher than ambient temperature, and may undergo temperature-dependent changes that are not negligible. In such circumstances, the image sensor may include a temperature compensator for monitoring the lens temperature and adaptively correcting the optical properties for stable performance. However, temperature sensors to be installed for individual lenses or structures for mechanically adjusting the intervals between the lenses can structurally complicate the optical system and increase the weight and cost, and thus cannot be used.

In response to the above issue, one or more aspects of the present invention are directed to an image sensor that includes an optical system combining a liquid lens with plastic lenses including temperature sensors and a controller, as defined by claim 1, and achieves accurate temperature compensation with a simple structure.

### SOLUTION TO PROBLEM

An image sensor according to a first aspect of the present invention includes the features according to claim 1. The image sensor with this structure includes the optical system combining the liquid lens with the plastic lenses and achieves accurate temperature compensation with a simple structure.

For example, the controller may control the voltage to be applied from the electrode to the liquid lens in accordance with the temperature measured by the temperature sensors to change a refractive power of the liquid lens so as to cancel a temperature-dependent change in properties of the first plastic lens and the second plastic lens. The liquid lens allows temperature compensation in the entire optical system, thus increasing the reliability and stability of the image sensor. This also eliminates any additional special temperature compensator or any structure for mechanically adjusting the intervals between the lenses.

The temperature sensors may be located on a substrate on which the electrode is formed. The substrate is commonly used by the electrode for applying a voltage to the liquid lens and the temperature sensor. Thus, the structure is simpler, includes fewer components, and is less costly. The electrode (substrate) are to be used to apply a voltage to the liquid lens and thus located near the liquid lens. Thus, the temperature sensors can be easily designed to be adjacent to the liquid lens.

In the above aspects of the present invention, the "temperature sensor located near the liquid lens" refers to a plurality of temperature

sensors. The structure including one temperature sensor may be simplest and cost-effective, however, does not fall within the scope of the claims. The structure including multiple temperature sensors use measured temperatures at multiple positions and thus increase the accuracy of temperature compensation According to the independent claim, multiple temperature sensors are arranged along the optical axis of the optical unit to determine measured temperatures at multiple positions along the temperature gradient. This allows accurate estimation of the temperature gradient and the lens temperatures.

The optical unit may include a lens barrel supporting the optical system, and the lens barrel may include a passage connecting a space on the object side of the liquid lens in the lens barrel with a space on the image side of the liquid lens. The passage allows warmer air in the space on the image side to be replaced with the air in the space on the object side. This reduces the temperature gradient and the temperature differences between the first plastic lens, the liquid lens, and the second plastic lens. The temperatures at both ends of the temperature gradient (the positions of the first and second plastic lenses) may be estimated from the measured temperature at an intermediate position (the position of the liquid lens) along the temperature gradient. The estimation is likely to be more accurate with a system having a small temperature gradient than with a system having a large temperature gradient. The passage reduces the temperature gradient, thus increasing the accuracy of temperature compensation.

The image sensor may further include a heat insulator between the optical unit and the controller. The heat insulator reduces heat transfer from the controller to the optical unit. This reduces the temperature rise on the image side of the optical unit, and thus reduces the temperature gradient in the optical unit.

### ADVANTAGEOUS EFFECTS

An image sensor according to one or more aspects of the present invention includes an optical system combining a liquid lens with plastic lenses including temperature sensors and a controller, as defined by claim 1, and achieves accurate temperature compensation with a simple structure.

### BRIEF DESCRIPTION OF THE DRAWINGS

FIG. 1 is a schematic diagram of an image sensor according to an example, not falling within the scope of the claims.
FIG. 2A and FIG. 2B are graphs showing the temperature gradient and the estimated error.
FIG. 3 is a diagram of an example sensor system including image sensors.
FIG. 4 is a perspective view of an image sensor according to a first example showing its main part.
FIG. 5 is a cross-sectional view of the image sensor according to the first example showing its main part.
FIG. 6 is an example table for determining the application voltage for a liquid lens.
FIG. 7 is a cross-sectional view of an image sensor according to a second example showing its main part.
FIG. 8 is a graph showing the temperature gradient and the estimated error in the second example.
FIG. 9 is a cross-sectional view of an image sensor according to a third example showing its main part.
FIG. 10 is a cross-sectional view of an image sensor according to a preferred embodiment showing its main part.

### DESCRIPTION OF EMBODIMENTS

### <Application Example>

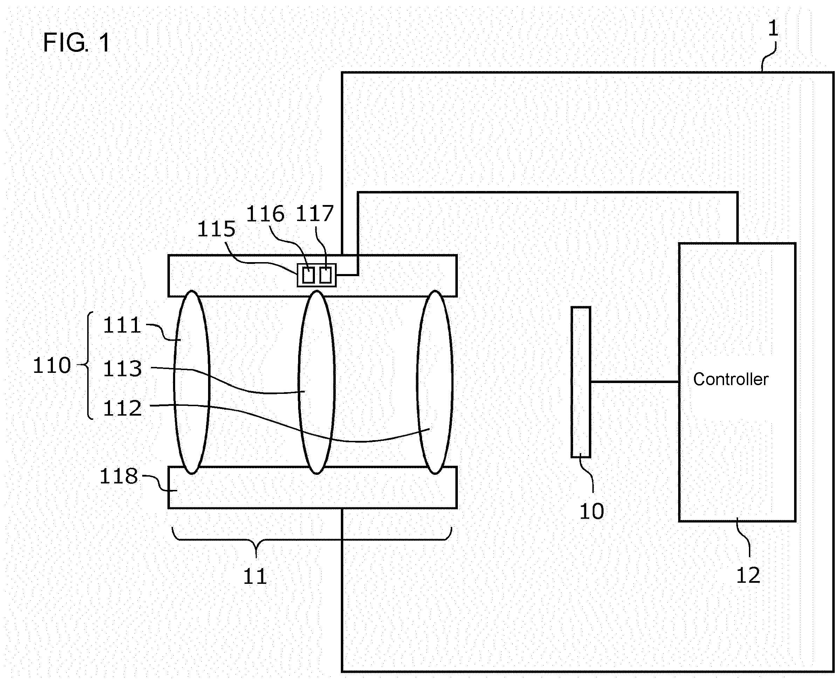

An example use of the present invention will now be described. FIG. 1 is a schematic diagram of an image sensor according to an example, not falling within the scope of the claims.

An image sensor 1 mainly includes an imaging device 10, an optical unit 11, and a controller 12. The optical unit 11 guides light to the imaging device 10. The optical unit 11 includes an optical system 110, a flexible substrate 115, and a lens barrel 118. The optical system 110 includes a first plastic lens 111, a liquid lens 113, and a second plastic lens 112 arranged in order of distance from the object. The flexible substrate 115 includes electrodes 116 for applying a voltage to the liquid lens 113, and a temperature sensor 117. The lens barrel 118 is a housing supporting the optical system 110. The controller 12 controls the imaging device 10 and the optical unit 11 and performs image processing and other computation. The imaging device 10 and the controller 12 are inside a housing for the image sensor body.

The controller 12 monitors the temperature of the optical unit 11 using the temperature sensor 117 during the operation of the image sensor 1. The controller 12 controls the voltage to be applied from the electrodes 116 to the liquid lens 113 in accordance with the temperature measured by the temperature sensor 117 to adjust the refractive power of the liquid lens 113.

The liquid lens 113 has the refractive power adjusted to change the focus position. For example, the liquid lens 113 has the focus position adjusted in accordance with the distance from the image sensor 1 to the object measured by a range sensor (not shown). This allows fast active AF. The liquid lens 113 in the present example has the refractive power adjusted also for temperature compensation in the optical system 110. More specifically, the liquid lens 113 has the refractive power changed to cancel the temperature-dependent change in the properties of the first plastic lens 111 and the second plastic lens 112. Thus, the optical system 110 has the optical properties maintained constant as a whole independently of temperature.

The optical system 110 with this structure incorporates the liquid lens 113 and thus allows faster AF and has a longer service life than a motor-driven optical system. The plastic lenses 111 and 112 as solid lenses are combined with the liquid lens 113 to reduce the weight and the cost of the optical system 110, thus reducing the weight and the cost of the entire image sensor 1.

The liquid lens 113 and the plastic lenses 111 and 112 are more temperature-dependent than, for example, glass lenses, and have the optical properties greatly dependent on temperature. Thus, the liquid lens 113 in the present example receives a voltage controlled in accordance with the temperature measured by the temperature sensor 117 to have the optical properties (refractive power) adjusted adaptively. This allows temperature compensation in the entire optical system 110 including the liquid lens 113 and the plastic lenses 111 and 112. The liquid lens 113 allows temperature compensation in the entire optical system 110, thus increasing the reliability and stability of the image sensor 1. This also eliminates any additional special temperature compensator or any structure for mechanically adjusting the intervals between the lenses.

The temperature sensor 117 in the present example is adjacent to the liquid lens 113. The temperature sensor 117 at this location allows accurate detection or estimation of the temperature of the liquid lens 113, thus allowing the liquid lens 113 to serve as a more accurate temperature compensator. The liquid lens 113 is typically more temperature-dependent than the plastic lenses 111 and 112. Thus, the liquid lens 113 may serve as an accurate temperature compensator to increase the accuracy of temperature compensation in the entire optical system 110 including the liquid lens 113 and the plastic lenses 111 and 112.

The temperature sensor 117 may be adjacent to the liquid lens 113 also for the reason below. An electrical component such as the temperature sensor 117 is to be installed in the optical unit 11 and electrically connected to the controller 12 in the image sensor body. The electrodes 116, which are adjacent to the liquid lens 113 to apply a voltage to the liquid lens 113, allow design that can easily incorporate an additional component for electrically connecting the electrical component.

The liquid lens 113 in the present example is located between the two plastic lenses 111 and 112. This structure may increase the accuracy of temperature compensation. The image sensor body typically includes components that generate much heat, such as a processor, a drive circuit, a power integrated circuit (IC), and a coil component, which are hereafter collectively referred to as a heating element. Thus, the image side of the optical unit 11 is susceptible to their heat. In contrast, the object side of the optical unit 11 is away from the heating element and is thus dependent on ambient temperature around the image sensor 1. During the operation of the image sensor 1, the optical unit 11 has a temperature gradient at which the temperature gradually decreases from the image side to the object side of the optical unit 11. Thus, the lenses 111 to 113 included in the optical system 110 have different temperatures. The lens barrel 118 (lens support) is to be formed from a plastic material to have a coefficient of linear expansion similar to that of the plastic lenses 111 and 112. However, the plastic material typically has low thermal conductivity and tends to maintain the above temperature gradient (or in other words, the temperature differences between the lenses) over time. The optical unit 11 is expected to have a temperature difference between the image side and the object side of a dozen degrees Celsius or higher, depending on the design. The temperature difference also depends on the heating element temperature and the environmental temperature. For example, the heating element generates more heat with more frequent image capture or under a greater processing load.

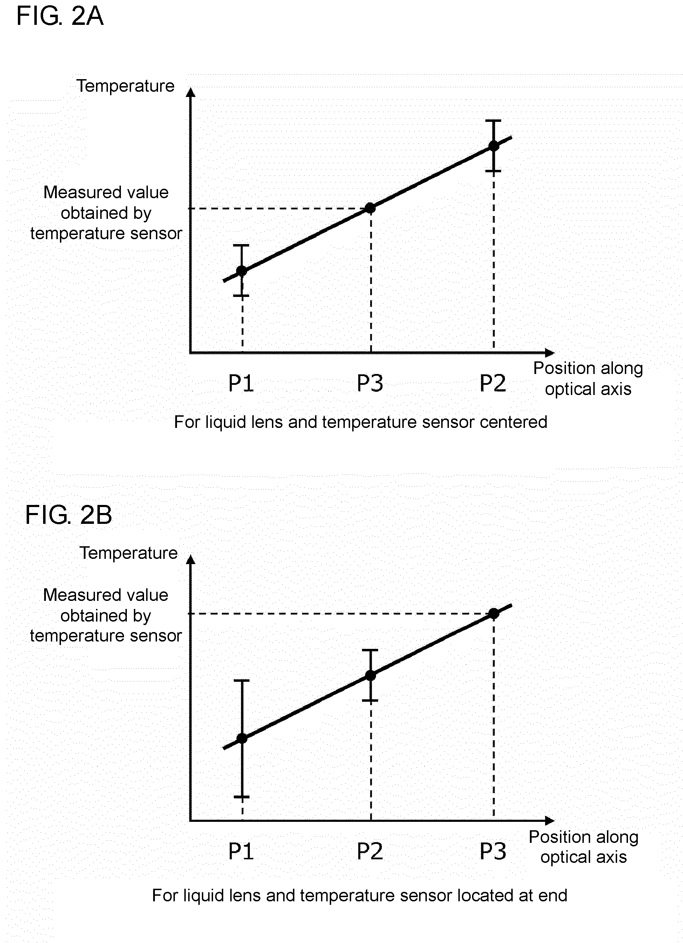

FIG. 2A schematically shows the temperature gradient along the optical axis. In FIG. 2A, P1 indicates the position of the first plastic lens 111, P2 indicates the position of the second plastic lens 112, P3 indicates the position of the liquid lens 113, and the vertical axis indicates the temperature at each position. The figure schematically shows the temperature gradually decreasing from the image side to the object side.

In the present example, the liquid lens 113 is located between the two plastic lenses 111 and 112, and the temperature sensor 117 is adjacent to the liquid lens 113. Thus, the temperature of the liquid lens 113 at the position P3 can be determined accurately. The temperatures of the plastic lenses 111 and 112 (the temperatures at the positions P1 and P2) are estimated from the measured value obtained by the temperature sensor 117. Thus, the estimation accuracy tends to decrease at a greater distance from the position P3. FIG. 2A shows error bars indicating the error in temperature at the positions P1 and P2 estimated from the measured value at the position P3.

In the structure including the first plastic lens, the second plastic lens, and the liquid lens arranged in order of distance from the object with the temperature sensor installed adjacent to the liquid lens, the temperature of the liquid lens may be accurately measured but the temperature of the first plastic lens, nearest the object, may be inaccurately estimated and may have large error at the position P1 as shown in FIG. 2B. A similar issue may arise for the liquid lens, the first plastic lens, and the second plastic lens arranged in order of distance from the object.

Such comparison and examination have revealed the structure in the present example including the liquid lens 113 between the two plastic lenses 111 and 112, and the temperature sensor 117 adjacent to the liquid lens 113. In this structure, the temperature sensor 117 is located not far from either the first plastic lens 111 or the second plastic lens 112. The temperature sensor 117 measures the temperature at an intermediate position (the position P3) along the temperature gradient at which the temperature gradually decreases from the image side (the second plastic lens 112) to the object side (the first plastic lens 111). Thus, the temperature sensor 117 adjacent to the liquid lens 113 alone can determine the temperature state of the liquid lens 113, and also allows estimation of the temperature states of the two plastic lenses 111 and 112 with satisfactory accuracy.

The image sensor 1 according to the present embodiment includes the optical system 110 combining the liquid lens 113 with the plastic lenses 111 and 112 and achieves accurate temperature compensation with a simple structure.

### < Example Use of Image Sensor>

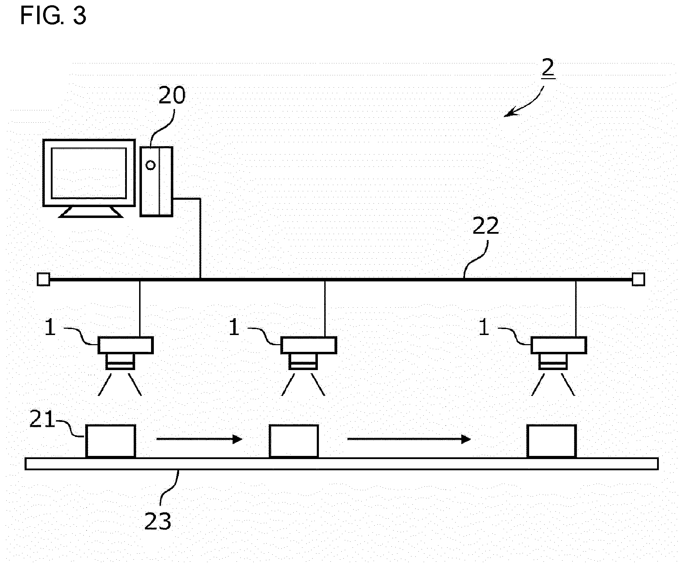

FIG. 3 shows an example sensor system including the image sensors according to the embodiment of the present invention. A sensor system 2 according to the present embodiment inspects and manages products 21 on, for example, a production line. The sensor system 2 includes multiple image sensors 1 and an information processor 20. The information processor 20 is connected to the image sensors 1 through an industrial network 22 such as Ethernet for Control Automation Technology (EtherCAT), and transmits and receives data to and from the image sensors 1 through the network 22. In the example in FIG. 3, three image sensors 1 are installed to capture images of the products 21 carried on a conveyor 23. However, any other number of image sensors 1 may be installed. A large factory may include tens, hundreds, or more image sensors. The sensor system 2 may include image sensors 1 attached to moving objects such as robot arms. Each image sensor 1 may capture images of a product 21 from different angles while changing its position, posture, and focus position.

The industrial image sensor 1 is used for various image-based processes. Examples include recording images of objects to be inspected, recognizing shapes, detecting edges and measuring widths and numbers, measuring areas, determining color features, labeling and segmentation, object recognition, reading barcodes and two-dimensional codes, optical character recognition (OCR), and individual identification. The processor-integrated image sensor (smart camera) according to the present embodiment combines the imaging system with the processing system. In some embodiments, the imaging system may be separated from the processing system in an image sensor. The optical unit described above may be included in such an image sensor. The image sensor 1 is also referred to as, for example, a vision sensor or a vision system.

### <First Example>

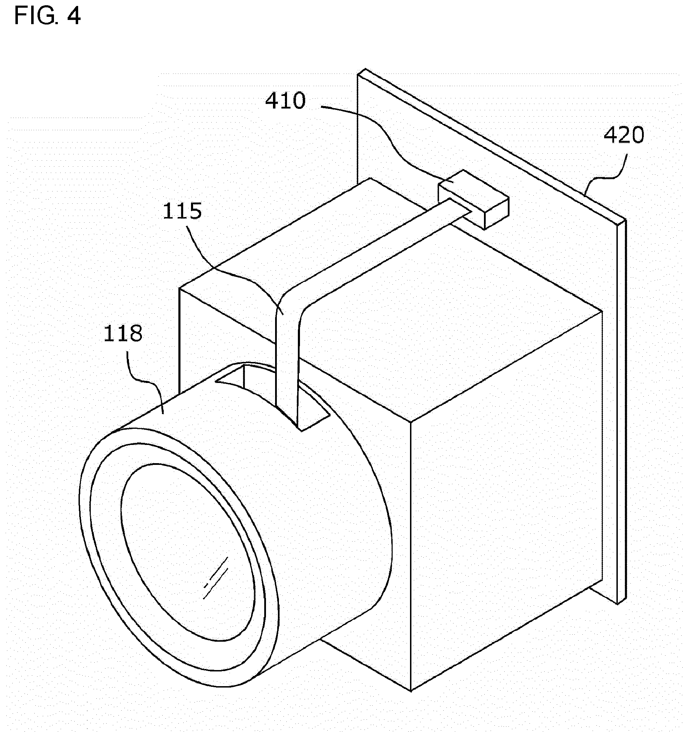

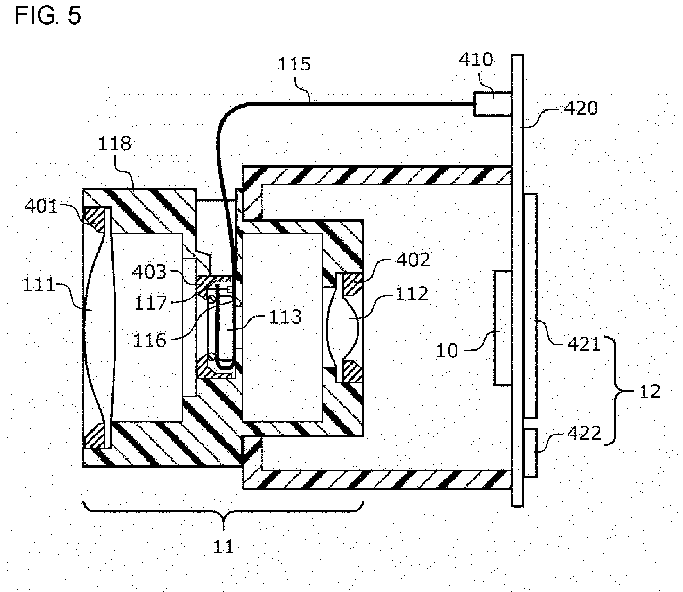

FIGs. 4 and 5 show an image sensor according to a first example. FIG. 4 is a perspective view of the image sensor according to the first example showing its main part. FIG. 5 is a cross-sectional view of the image sensor according to the first example showing its main part, not falling within the scope of the claims.

The optical unit 11 includes the optical system 110 combining the two plastic lenses 111 and 112 with the liquid lens 113. The first plastic lens 111, the liquid lens 113, and the second plastic lens 112 are arranged in order from the object side and assembled on the lens barrel 118. The lenses 111, 113, and 112 are respectively fastened with holder rings 401, 403, and 402. The lens barrel 118 is formed from a resin material having a coefficient of linear expansion similar to that of the plastic lenses 111 and 112. Reference numeral 115 indicates a flexible substrate. The flexible substrate 115 includes the electrodes 116 for applying a voltage to the liquid lens 113, and the temperature sensor 117. The flexible substrate 115 is connected to a control board 420 with a connector 410. The control board 420 incorporates, for example, the imaging device 10, a processor 421, and a memory 422. The processor 421 and the memory 422 in the example form the controller 12 in FIG. 1.

The temperature sensor 117 measures the temperature around the liquid lens 113 and may be, for example, a thermistor. The temperature sensor 117 measures the temperature, which is then received by the processor 421 through the flexible substrate 115.

The imaging device 10 generates and outputs image data by photoelectric conversion, and may include, for example, a charge-coupled device (CCD) or a complementary metal-oxide-semiconductor (CMOS). For example, the processor 421 performs image processing (e.g., preprocessing and feature extraction) on image data, performs various processes (e.g., inspection, character recognition, and individual identification) based on the results of the image processing, transmits and receives data to and from an external device, generates data to be output to the external device, processes data received from the external device, and controls the liquid lens 113 and the imaging device 10. For example, the processor 421 may be a general-purpose processor such as a central processing unit (CPU) or microprocessor unit (MPU), or may be a field-programmable gate array (FPGA) or an application-specific integrated circuit (ASIC). The memory 422 is a nonvolatile storage device, such as an electrically erasable programmable read-only memory (EEPROM). The memory 422 stores programs and data to be used by the processor 421.

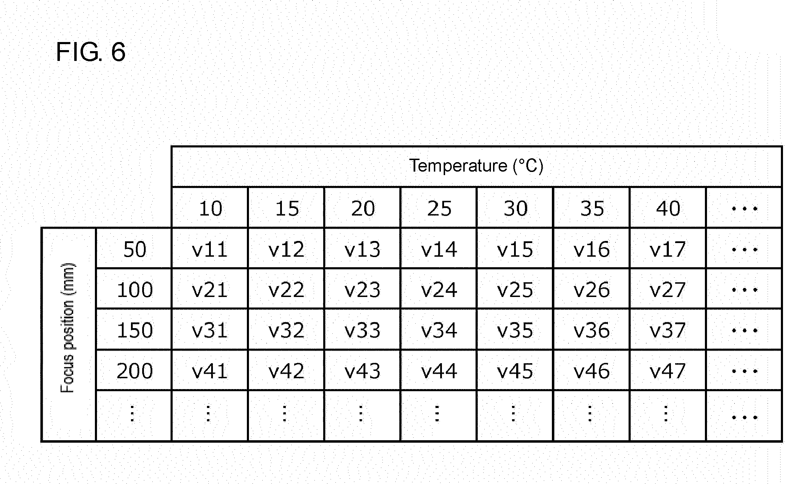

FIG. 6 shows example data stored in the memory 422 for determining the application voltage for the liquid lens 113. The data represents a table defining the correspondence between the focus position (the distance from the image sensor to the object to be in focus), the temperature measured by the temperature sensor 117, and the voltage to be applied to the liquid lens 113. In the table, the values v11, v12, ... of the application voltage are set to achieve both intended focus positions and temperature compensation at the corresponding temperatures. Specific values for the application voltage may be determined by experiments or simulation. In some embodiments, the temperature properties may be measured for individual products to determine the values of the application voltage, for example, before shipment, to accommodate non-negligible variations in the individual optical systems 110.

The processor 421 constantly monitors the measured temperature received from the temperature sensor 117 during the operation of the image sensor 1. The processor 421 determines, as appropriate, the value of the voltage to be applied and controls the voltage value to be output to the electrodes 116 based on the measured temperature, the intended focus position, and the table in FIG. 6. The control allows accurate adjustment to the intended focus position independently of temperature, thus increasing the reliability and stability of the image sensor 1.

The table in FIG. 6 may not include a value corresponding to the measured temperature and the intended focus position. In this case, the value corresponding to the closest conditions may be selected, or an appropriate voltage value may be calculated by interpolation. The example table in FIG. 6 may be modified to have finer or coarser increments of the conditions. In some embodiments, the data may be in the form of a function, instead of a table, that defines the relationship among the focus position, the temperature, and the application voltage.

### <Second Example>

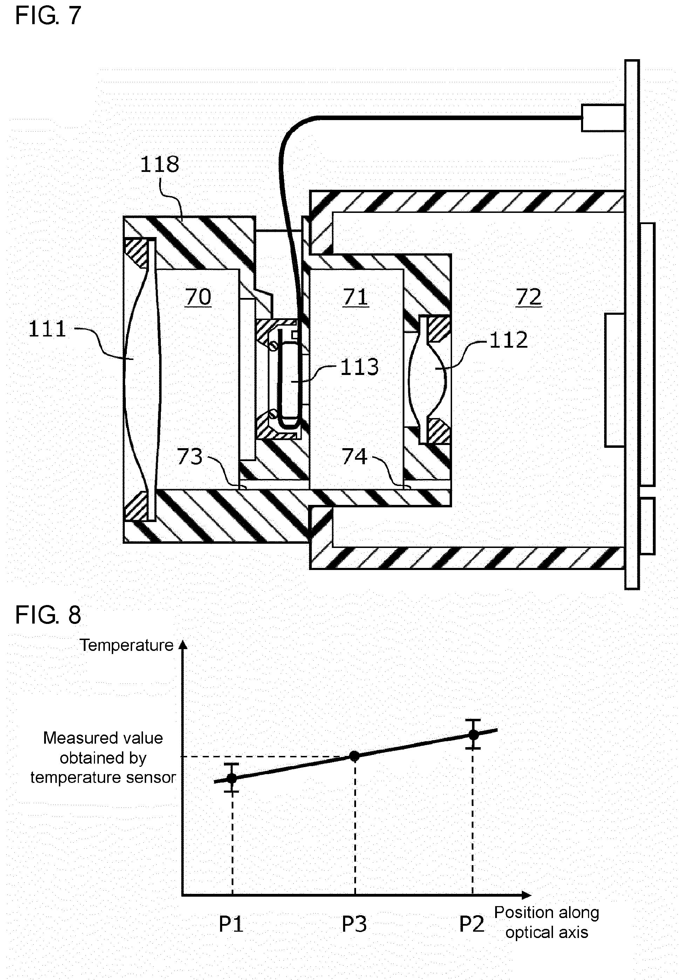

FIG. 7 shows an image sensor according to a second example, not falling within the scope of the claims. In the image sensor according to the second example, the lens barrel 118 includes a passage 73 and a passage 74. The passage 73 connects a space 70 on the object side of the liquid lens 113 with a space 71 on the image side of the liquid lens 113. The passage 74 connects the space 71 on the object side of the second plastic lens 112 with a space 72 on the image side of the second plastic lens 112.

The passages 73 and 74 allow warmer air in the spaces nearer the image to be replaced with air in the spaces nearer the object. This reduces the temperature gradient as shown in FIG. 8, and reduces the temperature differences between the first plastic lens 111, the liquid lens 113, and the second plastic lens 112. The temperatures at both ends of the temperature gradient (the positions P1 and P2 of the first and second plastic lenses) may be estimated from the measured temperature at an intermediate position (the position P3 of the liquid lens) along the temperature gradient. The estimation is likely to be more accurate with a system having a small temperature gradient than with a system having a large temperature gradient, as can be seen by comparing FIG. 8 with FIG. 2A. The passages 73 and 74 reduce the temperature gradient, thus increasing the accuracy of temperature compensation.

### <Third Example>

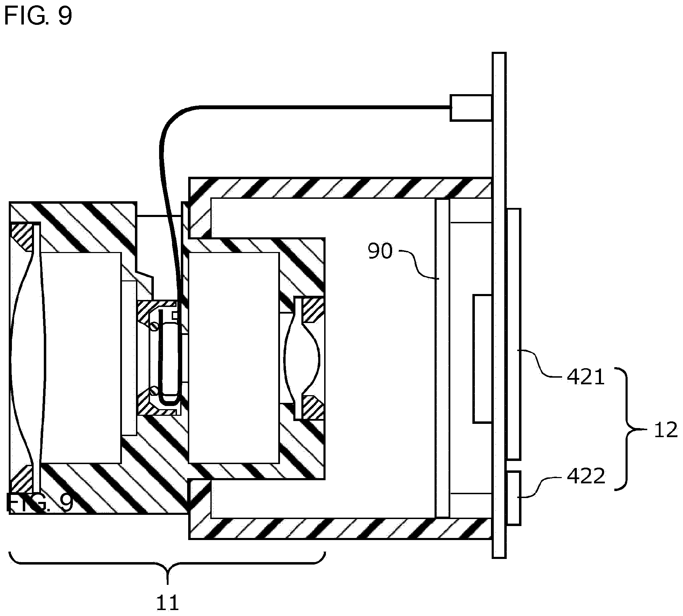

FIG. 9 shows an image sensor according to a third example, not falling within the scope of the claims. The image sensor according to the third example includes a heat insulator 90 between the optical unit 11 and the controller 12.

The heat insulator 90 may be a plate of transparent resin or glass. The heat insulator 90 reduces heat transfer from the controller 12 to the optical unit 11. This reduces the temperature rise on the image side of the optical unit 11, and thus reduces the temperature gradient. The image sensor thus has the effects similar to those of the second example.

### <Fourth Example>

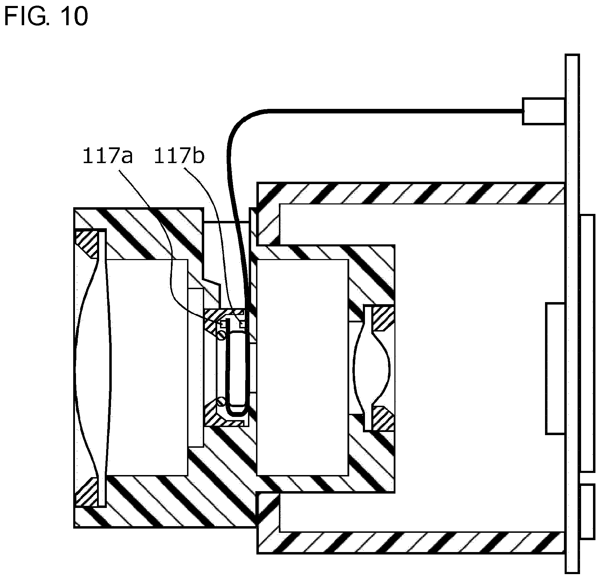

FIG. 10 shows an image sensor according to a fourth example, according to a preferred embodiment of the present invention. The image sensor according to the fourth example includes two temperature sensors 117a and 117b arranged along the optical axis. The image sensor with this structure provides measured temperatures at two positions along the temperature gradient. This allows accurate estimation of the temperature gradient and the lens temperatures. The image sensor may thus allow more accurate temperature compensation than in the first to third examples described above. Although FIG. 10 shows the two temperature sensors, three or more temperature sensors may be included.

### <Others>

The above embodiments and examples describe exemplary structures according to one or more aspects of the present invention. The present invention is not limited to the specific embodiments and examples described above, since the scope of the present invention is defined by the appended claims.

### REFERENCE SIGNS LIST

1: image sensor
10: imaging device
11: optical unit
12: controller
110:optical system
111:first plastic lens
112:second plastic lens
113:liquid lens
115:flexible substrate
116: electrode
117:temperature sensor
118:lens barrel

## Claims

1. An image sensor (1), comprising:
an imaging device (10);
an optical unit (11) configured to guide light to the imaging device (10); and
a controller (12) configured to control the imaging device (10) and the optical unit (11), wherein
the optical unit (11) includes:
an optical system (110) including a single liquid lens (113), a first plastic lens (111) located on an object side of the single liquid lens (113), and a second plastic lens (112) located on an image side of the single liquid lens (113); and
an electrode (116) to apply a voltage to the single liquid lens (113); wherein
a plurality of temperature sensors (117a, 117b) arranged along an optical axis are located near the single liquid lens (113) in the optical unit (11), and
the controller (12) controls the voltage to be applied from the electrode (116) to the single liquid lens (113) in accordance with a temperature measured by the plurality of temperature sensors (117a, 117b).

2. The image sensor (1) according to claim 1, wherein
the controller (12) controls the voltage to be applied from the electrode (116) to the single liquid lens (113) in accordance with the temperature measured by the plurality of temperature sensors (117a, 117b) to change a refractive power of the single liquid lens (113) so as to cancel a temperature-dependent change in properties of the first plastic lens (111) and the second plastic lens (112).

3. The image sensor (1) according to claim 1 or claim 2, wherein
the plurality of temperature sensors (117a, 117b) are located on a substrate (115) on which the electrode (116) is formed.

4. The image sensor (1) according to any one of claims 1 to 3, wherein
the optical unit (11) includes a lens barrel (118) supporting the optical system (110), and
the lens barrel (118) includes a passage (73) connecting a space (70) on the object side of the single liquid lens (113) in the lens barrel (118) with a space (71) on the image side of the single liquid lens (113).

5. The image sensor (1) according to any one of claims 1 to 4, further comprising:
a heat insulator (90) between the optical unit (11) and the controller (12).

## Patentansprüche

1. Bildsensor (1), umfassend: eine Bildaufnahmevorrichtung (10) ;
eine optische Einheit (11), die so ausgelegt ist, dass sie Licht zur Bildaufnahmevorrichtung (10) leitet; und
eine Steuerung (12), die so ausgelegt ist, dass sie die Bildaufnahmevorrichtung (10) und die optische Einheit (11) steuert, wobei
die optische Einheit (11) Folgendes aufweist:
ein optisches System (110), das eine einzelne flüssige Linse (113), eine erste Kunststofflinse (111), die sich auf einer Objektseite der einzelnen flüssigen Linse (113) befindet, und eine zweite Kunststofflinse (111) aufweist, die sich auf einer Bildseite der einzelnen flüssigen Linse (113) befindet, und
eine Elektrode (116), die eine Spannung an die einzelne flüssige Linse (113) anlegt;
wobei
sich eine Mehrzahl von Temperatursensoren (117a, 117b), die entlang einer optischen Achse angeordnet ist, in der Nähe der einzelnen flüssigen Linse (113) in der optischen Einheit (11) befindet und
die Steuerung (12) die Spannung, die von der Elektrode (116) an die einzelne flüssige Linse (113) angelegt wird, entsprechend einer Temperatur steuert, die von der Mehrzahl von Temperatursensoren (117a, 117b) gemessen wird.

2. Bildsensor (1) nach Anspruch 1, wobei
die Steuerung (12) die Spannung, die von der Elektrode (116) an die einzelne flüssige Linse (113) angelegt wird, entsprechend der Temperatur steuert, die von der Mehrzahl von Temperatursensoren (117a, 117b) gemessen wird, und so eine Brechkraft der einzelnen flüssigen Linse (113) verändert, damit eine temperaturabhängige Veränderung von Eigenschaften der ersten Kunststofflinse (111) und der zweiten Kunststofflinse (112) behoben wird.

3. Bildsensor (1) nach Anspruch 1 oder Anspruch 2, wobei sich die Mehrzahl von Temperatursensoren (117a, 117b) auf einem Substrat (115) befindet, auf dem die Elektrode (116) ausgebildet ist.

4. Bildsensor (1) nach einem der Ansprüche 1 bis 3, wobei
die optische Einheit (11) einen Objektivtubus (118) aufweist, der das optische System (110) trägt und
der Objektivtubus (118) einen Durchgang (73) aufweist, der einen Raum (70) auf der Objektseite der einzelnen flüssigen Linse (113) in dem Objektivtubus (118) mit einem Raum (71) auf der Bildseite der einzelnen flüssigen Linse (113) verbindet.

5. Bildsensor (1) nach einem der Ansprüche 1 bis 4, ferner umfassend:
ein Wärmedämmelement (90) zwischen der optischen Einheit (11) und der Steuerung (12).

## Revendications

1. Capteur d'image (1), comprenant :
un dispositif d'imagerie (10) ;
une unité optique (11) conçue pour guider de la lumière jusqu'au dispositif d'imagerie (10) ; et
un dispositif de commande (12) conçu pour commander le dispositif d'imagerie (10) et l'unité optique (11), dans lequel
l'unité optique (11) comporte :
un système optique (110) comportant une lentille liquide unique (113), une première lentille en plastique (111) située d'un côté objet de la lentille liquide unique (113), et une seconde lentille en plastique (112) située d'un côté image de la lentille liquide unique (113) ; et
une électrode (116) destinée à appliquer une tension à la lentille liquide unique (113) ;
dans lequel
une pluralité de capteurs de température (117a, 117b) agencés le long d'un axe optique sont situés près de la lentille liquide unique (113) dans l'unité optique (11), et
le dispositif de commande (12) commande la tension à appliquer à la lentille liquide unique (113) à partir de l'électrode (116) en fonction d'une température mesurée par la pluralité de capteurs de température (117a, 117b).

2. Capteur d'image (1) selon la revendication 1, dans lequel le dispositif de commande (12) commande la tension à appliquer à la lentille liquide unique (113) à partir de l'électrode (116) en fonction de la température mesurée par la pluralité de capteurs de température (117a, 117b) pour modifier une puissance optique de la lentille liquide unique (113) de façon à annuler une modification dépendante de la température des propriétés de la première lentille en plastique (111) et de la seconde lentille en plastique (112) .

3. Capteur d'image (1) selon la revendication 1 ou la revendication 2, dans lequel
la pluralité de capteurs de température (117a, 117b) sont situés sur un substrat (115) sur lequel est formée l'électrode (116).

4. Capteur d'image (1) selon l'une quelconque des revendications 1 à 3, dans lequel
l'unité optique (11) comporte un barillet de lentille (118) supportant le système optique (110), et
le barillet de lentille (118) comporte un passage (73) reliant un espace (70) du côté objet de la lentille liquide unique (113) dans le barillet de lentille (118) à un espace (71) du côté image de la lentille liquide unique (113).

5. Capteur d'image (1) selon l'une quelconque des revendications 1 à 4, comprenant en outre :
un isolant thermique (90) entre l'unité optique (11) et le dispositif de commande (12).
